# EUROPÄISCHE PATENTANMELDUNG

(11) **EP 0 702 043 A2**
(43) Veröffentlichungstag der Anmeldung: **20.03.1996**
(21) Anmeldenummer: 95112744.8
(22) Anmeldetag: 12.08.1995
(51) Int. Cl.: C08G 63/06, C08G 63/685, C08G 63/60, C11D 1/00, C11D 3/37

(54) **Verfahren zur Herstellung von Polykondensaten der Citronensäure und ihre Verwendung in Wasch- und Reinigungsmitteln**

(30) Priorität: 22.08.1994 DE 4429691
(71) Anmelder: BASF AKTIENGESELLSCHAFT, D-67056 Ludwigshafen (DE)
(72) Erfinder: Boeckh, Dieter, Dr., D-67117 Limburgerhof (DE); Funhoff, Angelika, Dr., D-69198 Schriesheim (DE); Kud, Alexander, Dr., D-55234 Eppelsheim (DE); Baur, Richard, Dr., D-67112 Mutterstadt (DE); Schwendemann, Volker, Dr., D-67434 Neustadt (DE); Schornick, Gunnar, Dr., D-67271 Neuleiningen (DE)

(57) **Zusammenfassung**

Verfahren zur Herstellung von Polykondensaten der Citronensäure und/oder Isocitronensäure, wobei man
(a) Citronensäure, Isocitronensäure oder deren Gemische in einem organischen Lösemittel in Gegenwart eines wasserentziehenden Mittels zumindest teilweise in die Anhydridform überführt und das Reaktionsgemisch anschließend, gegebenenfalls nach Zusatz von cokondensierbaren Verbindungen aus der Gruppe
(b) anderer Hydroxycarbonsäuren und/oder
(c) Aminosäuren, Alkoholen, Aminen und/oder mindestens zweibasischen Carbonsäuren, die von den Carbonsäuren (a) und (b) verschieden sind,
   bei Temperaturen von mindestens 80°C zu Polycarboxylaten mit einem mittleren Molekulargewicht von mindestens 500 kondensiert, Polykondensate der Citronensäure und/oder der Isocitronensäure, die nach dem Verfahren erhältlich sind, und
Verwendung der genannten Polykondensate als Zusatz zu phosphatfreien und phosphatreduzierten Wasch- und Reinigungsmitteln sowie Wasch- und Reinigungsmittel, die mindestens ein Tensid und gegebenenfalls Builder sowie andere übliche Bestandteile enthalten, mit einem Gehalt von die 0,1 bis 30 Gew.-% eines oben genannten Polyesterscarboxylats.

## Beschreibung

Die Erfindung betrifft ein Verfahren zur Herstellung von Polykondensaten der Citronensäure und Isocitronensäure sowie die Verwendung der Polykondensate als Zusatz zu phosphatfreien und phosphatreduzierten Wasch- und Reinigungsmitteln.

Aus der US-A-2 416 485 sind Polyester bekannt, die durch Erhitzen von hydroxylierten Ölen mit beispielsweise Citronensäure und Milchsäure aus Temperaturen von ca. 180 bis 200°C hergestellt werden. Die Harze werden beispielsweise in Gummimischungen, als Beschichtungsmaterial oder als Klebstoff verwendet.

Aus der EP-A-0 433 010 sind Polycarboxylate bekannt, die beispielsweise durch Reaktion von Citronensäureanhydrid mit Polyvinylalkohol oder Polyallylalkohl herstellbar sind. Die so erhältlichen Polyvinylcitrate bzw. Polyallylcitrate werden als Builder in Waschmitteln verwendet.

Aus der US-A-5,217,542 ist bekannt, wasserlösliche oder in Wasser dispergierbare Polyester, die durch alleinige Kondensation von beispielsweise Mischungen aus Weinsäure oder Weinsäureanhydrid und Citronensäure im Molverhältnis 1:0,1 bis 1:4 erhältlich sind, als Zusatz zu Waschmitteln zu verwenden. Die Kondensation kann gegebenenfalls auch zusätzlich in Gegenwart von bis zu 60 Mol.-% Äpfelsäure oder bis zu 90 Mol.-% Milchsäure oder Glykolsäure erfolgen.

Aus der JP-A-62/201,926 sind Polymerisate vom Hydroxypolycarbonsäuren bekannt. Beispielsweise erhält man Polyäpfelsäure durch Erhitzen von Äpfelsäure auf eine Temperatur von 140°C unter vermindertem Druck. Die so erhältlichen Polymerisate werden beispielsweise zur Herstellung von chirurgischem Nahtmaterial verwendet, das vom Körper absorbiert wird.

Der Erfindung liegt die Aufgabe zugrunde, ein neues Verfahren zur Herstellung von Kondensaten der Citronensäure zur Verfügung zu stellen, die gegenüber den bisher verwendeten Kondensaten von Polycarbonsäuren eine verbesserte inkrustationsinhibierende Wirkung in Waschmitteln haben.

Die Aufgabe wird erfindungsgemäß gelöst mit einem Verfahren zur Herstellung von Polykondensaten der Citronensäure und/oder Isocitronensäure, wenn man
(a) Citronensäure, Isocitronensäure oder deren Gemische in einem organischen Lösemittel in Gegenwart eines wasserentziehenden Mittels zumindest teilweise in die Anhydridform überführt und das Reaktionsgemisch anschließend, gegebenenfalls nach Zusatz von cokondensierbaren Verbindungen aus der Gruppe
(b) anderer Hydroxycarbonsäuren und/oder
(c) Aminosäuren, Alkoholen, Aminen und/oder mindestens zweibasischen Carbonsäuren, die von den Carbonsäuren (a) und (b) verschieden sind,
bei Temperaturen von mindestens 80°C zu Polycarboxylaten der Citronensäure und/oder Isocitronensäure mit einem mittleren Molekulargewicht von mindestens 500 kondensiert.

Gegenstand der Erfindung sind außerdem Polykondensate der Citronensäure und/oder der Isocitronensäure, die nach dem oben beschriebenen Verfahren erhältlich sind.

Ein weiterer Gegenstand der Erfindung ist die Verwendung der oben beschriebenen Polykondensate der Citronensäure und/oder der Isocitronensäure als Zusatz zu phosphatfreien und phosphatreduzierten Wasch- und Reinigungsmitteln.

Gegenstand der Erfindung sind außerdem Wasch- und Reinigungsmittel, die mindestens ein Tensid und gegebenenfalls Builder sowie andere übliche Bestandteile enthalten und die 0,1 bis 30 Gew.-% eines Polyestercarboxylats enthalten, das dadurch herstellbar ist, daß man
(a) Citronensäure, Isocitronensäure oder deren Gemische in einem organischen Lösemittel in Gegenwart eines wasserentziehenden Mittels zumindest teilweise in die Anhydridform überführt und das Reaktionsgemisch anschließend, gegebenenfalls nach Zusatz von cokondensierbaren Verbindungen aus der Gruppe
(b) anderer Hydroxycarbonsäuren und/oder
(c) Aminosäuren, Alkoholen, Aminen und/oder mindestens zweibasischen Carbonsäuren, die von den Carbonsäuren (a) und (b) verschieden sind,
bei Temperaturen von mindestens 80°C zu Polycarboxylaten der Citronensäure und/oder Isocitronensäure mit einem mittleren Molekulargewicht von mindestens 500 kondensiert.

Die Polyestercarboxylate, die durch alleinige Kondensation von Citronensäure hergestellt werden, enthalten Einheiten der Formel I und II 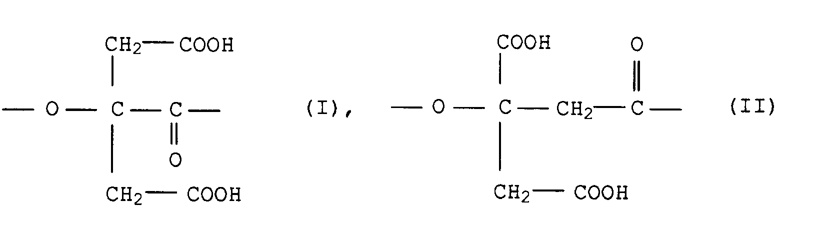
während bei alleiniger Kondensation von Isocitronensäure Polykondensate mit Struktureinheiten III bis V entstehen: 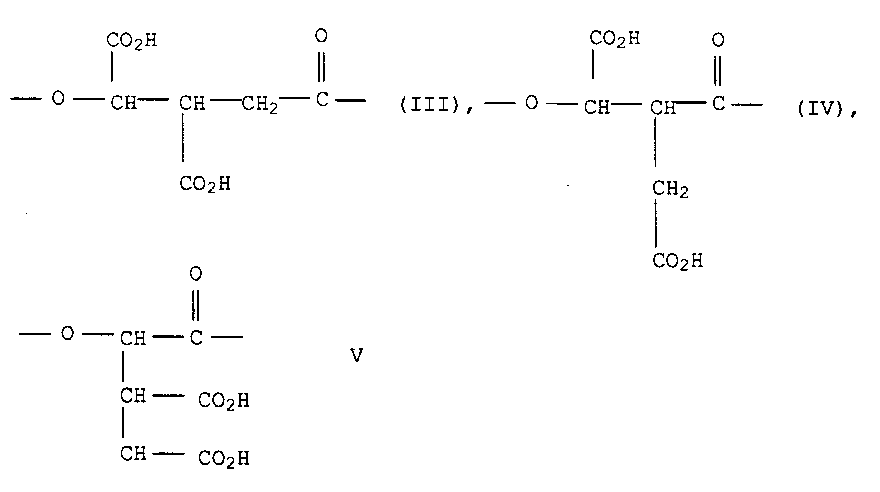
Neben den hier gezeigten linearen Struktureinheiten treten in den erfindungsgemäßen Polykondensaten je nach Wahl der Reaktionsbedingungen Verzweigungen durch Veresterung von Citronensäure oder Isocitronensäureeinheiten in bereits gebildeten Polymerketten auf.

Für die Herstellung der Polyestercarboxylate werden als Komponente (a) Citronensäure, Isocitronensäure oder deren Gemische eingesetzt. Vorzugsweise setzt man Citronensäure ein.

Als Komponente (b) werden Hydroxycarbonsäuren verwendet. Hierbei kann es sich beispielsweise um Mono- oder Dihydroxymonocarbonsäuren, Dihydroxydicarbonsäuren oder Monohydroxydicarbonsäuren handeln. Beispielsweise eignen sich als Komponente (b) Äpfelsäure, Tartronsäure, Glykolsäure, Milchsäure, Hydroxybuttersäure, Hydroxyvaleriansäure, Hydroxycapronsäuren, Weinsäure, Bis(hydroxymethyl)propionsäure und Glycerinsäure. Die Verbindungen der Gruppe (b) können entweder allein oder in Mischung untereinander eingesetzt werden, z.B. Mischungen aus Milchsäure und Äpfelsäure oder Mischungen aus Äpfelsäure und Glykolsäure.

Als Verbindungen der Gruppe (c) kommen Aminosäuren, Alkohole, Amine und/oder mindestens zweibasische Carbonsäuren, die von den Carbonsäuren (a) und (b) verschieden sind, in Betracht. Solche Carbonsäuren sind beispielsweise aliphatische oder aromatische Di- oder Tricarbonsäuren, wie beispielsweise Bernsteinsäure, Maleinsäure, Fumarsäure, Adipinsäure, Oxalsäure, Propantricarbonsäure oder Aconitsäure oder Alkenylbernsteinsäuren wie z.B. Butenylbernsteinsäure, Octenylbernsteinsäure oder Dodecenylbernsteinsäure.

Als Verbindungen der Gruppe (c) kommen außerdem Amine in Betracht. Beispiele hierfür sind C₁-C₁₈-Alkylamine wie Methylamin, Ethylamin, Butylamine, Cyclohexylamin und Stearylamin, Ethylendiamin, Propylendiamin, Hexamethylendiamin, Diethylentriamin, Triethylentetramin, Polyethylenimin, Ethanolamin, Diethanolamin und Triethanolamin.

Als Verbindungen der Gruppe (c) kommen außerdem Alkohole in Betracht. Beispiele hierfür sind einwertige C₁-C₁₈-Alkohole, wie Methanol, Ethanol, N-Propanol, Isopropanol, n-Butanol, Isobutanol, Cyclohexanol, 2-Ethylcyclohexanol, Benzylalkohol, Phenylethanol und Stearylalkohol. Außerdem eignen sich zwei- und mehrwertige Alkohole wie Ethylenglykol, Propylenglykol, Butandiol-1,4, Hexandiol-1,6, alkoxylierte ein- und mehrwertige Alkohole, z.B. 1 bis 50fach ethoxylierte C₁-C₁₈-Alkohole und Polyalkylenglykole, insbesondere Polyethylenglykole mit Molmassen bis zu 5000.

Außerdem eignen sich als Komponente (c) Aminosäuren. Beispiele hierfür sind Glycin, Glutaminsäure, Asparaginsäure, Alanin, Valin, Leucin, Isoleucin, Prolin und Serin.

Zur Herstellung der Polykondensate setzt man beispielsweise
(a) pro 1 Mol Citronensäure und/oder Isocitronensäure
(b) 0 bis 100 mol.-% mindestens einer anderen Hydroxycarbonsäure und/oder
(c) 0 bis 40 mol.-% an Aminosäuren, Alkoholen, Aminen und/oder mindestens 2 basischen Carbonsäuren, die von den Carbonsäuren (a) und (b) verschieden sind, ein.

Vorzugsweise stellt man durch alleinige Kondensation von Citronensäure Polycitronensäuren her. Die Anhydridbildung aus den Verbindungen der Komponente (a) und die Reaktion der Anhydride mit den Verbindungen (a), den aus (a) erhaltenen Anhydriden und gegebenenfalls den cokondensierbaren Verbindungen (b) und/oder (c) wird vorzugsweise mehrmals wiederholt. Beispielsweise erhält man durch zwei bis zehnmaliges Wiederholen der Anhydridbildung und Reaktion der Anhydride mit den freien OH-Gruppen der Verbindungen der cokondensierbaren Stoffe (b) und/oder (c) oder auch mit der OH-Gruppe von Citronensäureanhydrid Polykondensate mit einer höheren Molmasse. Beispielsweise beträgt das mittlere Molekulargewicht der Polykondensate 500 bis 25000 und liegt üblicherweise in dem Bereich von 600 bis 8000.

Die Polykondensation der Komponente (a) und gegebenenfalls (d) und/oder (c) erfolgt in einem organischen Lösemittel. Geeignete Lösemittel sind beispielsweise alle polaren aprotischen Lösemittel sowie flüssige einbasische Carbonsäuren. Einzelne Beispiele für Lösemittel sind Tetrahydrofuran, Dioxan, Ethylenglykoldimethylether, Diethylengylkoldimethylether, N-Methylpyrrolidon, N,N-Dimethylformamid, Essigsäure, Propionsäure oder Mischungen der genannten Lösemittel. Vorzugsweise verwendet man Dioxan, Tetrahydrofuran oder wasserfreie Essigsäure als organische Lösemittel. Die Konzentration der Komponenten (a) und gegebenenfalls (b) und/oder (c) in dem organischen Lösemittel kann in einem weiten Bereich variiert werden. Sie liegt z.B. bei 5 bis 90, vorzugsweise 10 bis 75 Gew.-%, bezogen auf das Reaktionsgemisch.

Im Falle der Verwendung von cyclischen Ethern als Lösemittel für die Polykondensation können diese unter den Reaktionsbedingungen teilweise in die Polykondensate eingebaut werden.

Die Kondensation wird in Gegenwart eines wasserentziehenden Mittels durchgeführt. Hierunter sollen alle Verbindungen verstanden werden, die beispielsweise mit wasserfreier Citronensäure unter Entzug von Wasser ein cyclisches Anhydrid, d.h. Citronensäureanhydrid bilden. Hierfür eignen sich beispielsweise Anhydride von einbasischen Carbonsäuren wie Acetanhydrid und Propionsäureanhydrid sowie gemischte Anhydride aus beispielsweise Essigsäure und Ameisensäure. Andere wasserentziehende Verbindungen sind Säurechloride wie Acetylchlorid und Propionylchlorid, Phosgen, Thionylchlorid, Phosphoroxychlorid und Dicyclohexylcarbodiimid. Die wasserentziehenden Mittel können in Abhängigkeit ihrer Reaktivität, bezogen auf Citronensäure oder Isocitronensäure, in unterstöchiometrischen, stöchiometrischen oder überstöchiometrischen Mengen eingesetzt werden. Pro Mol Citronensäure bzw. Isocitronensäure verwendet man in den meisten Fällen bis zu 2 Mol, vorzugsweise 0,2 bis 0,8 Mol eines wasserentziehenden Mittels auf jeder Kondensationsstufe. Als wasserentziehendes Mittel ist besonders Essigsäureanhydrid bevorzugt. Die Polykondensation wird bei Einsatz von Essigsäureanhydrid vorzugsweise in Essigsäure als organischen Lösemittel durchgeführt.

Die Herstellung der Polykondensate der Citronensäure und/oder Isocitronensäure erfolgt nach einem zweistufigen Verfahren, bei dem in der ersten Verfahrensstufe Citronensäure oder Isocitronensäure zumindest teilweise in die Anhydridform überführt werden. Die Anhydridbildung in der Gegenwart eines wasserentziehenden Mittels erfolgt beispielsweise in dem Temperaturbereich von 10 bis 80, vorzugsweise 40 bis 80°C. Bei einer Temperatur von mindestens 80°C reagieren die in der ersten Stufe der Reaktion gebildeten Anhydride mit den OH-Gruppen der Citronensäure, Isocitronensäure oder den OH-Gruppen von Citronensäureanhydrid oder Isocitronensäureanhydrid. Anhydridbildung und Kondensation der Anhydride in der zweiten Verfahrensstufe können gegebenenfalls auch bei einer einzigen Temperatur durchgeführt werden, sofern die Kondensation dabei ausreichend rasch verläuft. Vorzugsweise wird die Reaktion jedoch so geführt, daß die Temperatur bei der Polykondensation in der zweiten Stufe des Verfahrens mindestens 10, vorzugsweise mindestens 30°C oberhalb der Temperatur liegt, bei der die Anhydride aus den Verbindungen der Komponente (a) gebildet werden. Die Kondensationstemperatur in der zweiten Verfahrensstufe beträgt beispielsweise 80 bis 150, vorzugsweise 95 bis 140°C. Sofern in der Reaktionsmischung flüchtige Bestandteile vorhanden sind, die bei den Temperaturen, bei der die Polykondensation durchgeführt wird, verdampfen, arbeitet man in druckdichten verschlossenen Apparaturen.

Die beiden Verfahrensstufen der Anhydridbildung und der Kondensation werden vorzugsweise mehrfach nacheinander durchlaufen, wobei jeweils nur ein Teil der Citronensäure/Isocitronensäure in das Anhydrid überführt wird. Neben der Anhydridbildung der freien Citronensäure können auch bereits einkondensierte Citronensäureeinheiten erneut ins Anhydrid überführt werden, sofern sie noch 2 freie COOH-Gruppen aufweisen. Sofern diese Anhydride in bereits kondensierten Oligo- oder Polymeren nicht endständig sind, können sie zu Verzweigungen in den Polykondensaten führen.

Die Polykondensation kann gegebenenfalls in Gegenwart von Katalysatoren durchgeführt werden. Als Katalysatoren kommen insbesondere anorganische Mineralsäuren wie Schwefelsäure, Phosphorsäure, phosphorige Säure, unterphosphorige Säure und starke organische Säuren wie Sulfonsäuren und/oder Phosphonsäuren in Betracht. Beispiele hierfür sind p-Toluolsulfonsäure, Benzolsulfonsäure, Sulfobernsteinsäure, Methylsulfonsäure, Methylphosphonsäure und Ethylphosphonsäure. Andere prinzipiell geeignete Katalysatoren sind Lewis-Säuren wie z.B. Bortrifluorid, Bortichlorid, Aluminiumtrichlorid, Eisen(III)chlorid, Zinkchlorid etc. Auch Mischungen von Katalysatoren sind einsetzbar. Falls bei der Polykondensation Katalysatoren eingesetzt werden, geschieht dies in Mengen von beispielsweise 0,1 bis 5 Gew.-%. Meistens benötigt man nicht mehr als 1 Gew.-% eines Katalysators, bezogen auf die zu kondensierenden Verbindungen.

Besonders bevorzugt ist eine Arbeitsweise, bei der man eine Lösung von
(a) Citronensäure und/oder Isocitronensäure
   in wasserfreier Essigsäure durch Zusatz von Essigsäureanhydrid als wasserentziehenden Mittel partiell in Citronensäureanhydrid und/oder Isocitronensäureanhydrid bei Temperaturen bis zu 80°C überführt und das Reaktionsgemisch anschließend durch Erhitzen auf eine Temperatur in dem Bereich von 80 bis 150°C kondensiert. Die Verwendung von wasserfreier Essigsäure als organisches Lösemittel ist auch für die Herstellung von solchen Polyestercarboxylaten bevorzugt, bei der man Citronensäure oder Isocitronensäure mit den Verbindungen der Gruppe (b) und/oder (c) umsetzt. So kann man beispielsweise zu einer Lösung von Citronensäureanhydrid oder von Isocitronensäureanhydrid in Essigsäure
(b) Äpfelsäure, Glykolsäure, Milchsäure oder Mischungen der genanten Säuren
   zusetzen und durch Erhitzen auf eine Temperatur in den Bereich von 80 bis 150°C kondensieren. Die Kondensation kann gegebenenfalls zusätzlich noch in Gegenwart von
(c) Aminosäure, Alkohlen, Aminen und/oder mindestens zwei basischen Carbonsäuren, die von den Carbonsäuren (a) und (b) verschieden sind, durchgeführt werden. So führt beispielsweise der Einsatz von Ethylenglykol zu einer Molekulargewichtserhöhung der Polyestercarboxylate. Die bei der Kondensation mit dem wasserentziehenden Mittel erhältlichen Polyesterpolycarboxylate können an der endständigen OH-Gruppe der Polyester mit Acylresten, die beispielsweise aus dem wasserentziehenden Mittel stammen, substituiert sein. Die Polyesterpolycarboxylate tragen daher vielfach eine Acetylendgruppe, wenn man beispielsweise Essigsäureanhydrid oder Essigsäurechlorid als wasserentziehendes Mittel eingesetzt hat. Derartige Substitutionen wirken allerdings molmassenbegrenzend bei der Polykondensation. Sie können durch die Wahl wenig selektiver Bedingungen bei der Reaktion mit dem wasserentziehenden Mittel begünstigt werden, um den Polymerisationsgrad zu begrenzen. Vorzugsweise wählt man jedoch Bedingungen, die selektiv die Reaktion unter Wasserabspaltung und Bildung von cyclischen Anhydriden fördern und bei der Polykondensation zu möglichst hohen Molmassen führen.

Die erfindungsgemäß erhältlichen Polyesterpolycarboxylate sind nicht unbedingt linear aufgebaut, sondern können Verzweigungsstellen aufweisen, die durch die Kondensation von bereits einkondensierter nicht endständiger Citronensäure mit freier Citronensäure oder einer Polyesterkette mit freier OH-Gruppe zustande kommen. Die nach dem erfindungsgemäßen Verfahren erhältlichen Polyesterpolycarboxylate können mit wäßrigen oder mit alkoholischen Basen in die entsprechenden Salze überführt werden. Um eine Spaltung von Esterbindungen zu unterdrücken, bzw. zu vermeiden, erfolgt die Neutralisation vorzugsweise bei Temperaturen unterhalb von 30°C, wobei man außerdem darauf achtet, daß der pH-Wert des Reaktionsgemisches bei der Neutralisation in dem Bereich von 3,5 bis 9,5, vorzugsweise 4 bis 7,5 liegt. Die Neutralisation wird vorzugsweise in wäßrigem Medium durchgeführt. Um eine langsame Hydrolyse der neutralisierten Polyesterpolycarboxylate in wäßrigem Medium zu vermeiden, kann man die vollständig oder partiell neutralisierten Polyesterpolycarboxylate aus den Lösungen durch Verdampfen des jeweiligen Lösemittels gewinnen. Man erhält auf diese Weise Pulver oder Granulate, die praktisch ohne Veränderung gelagert werden können. Zur Neutralisation der Polyesterpolycarboxylate eignen sich Hydroxide, Oxide, Carbonate und Hydrogencarbonate der Alkali- und Erdalkalimetalle sowie Ammoniak, Amine wie Trimethylamin, Triethylamin, Butylamin, und Stearylamin, Triethanolamin, Diethanolamin, Ethanolamin und Morpholin. Vorzugsweise verwendet man Natronlauge, Kalilauge, Ammoniak, Soda, Natriumbicarbonat, Magnesiumoxid oder Calciumhydroxid.

Die oben beschriebenen Polykondensate der Citronensäure und/oder der Isocitronensäure werden als Zusatz zu phosphatfreien und phosphatreduzierten Wasch- und Reinigungsmitteln verwendet. Die Polyesterpolycarboxylate sind biologisch abbaubar und verringern beim Einsatz in Waschmitteln während des Waschprozesses die Inkrustation auf Geweben und fördern gleichzeitig die Schmutzablösung. Die Zusammensetzung von Waschmittelformulierungen können sehr unterschiedlich sein. Gleiches gilt für die Zusammensetzung von Reinigungsmittelformulierungen. Wasch- und Reinigungsmittelformulierungen enthalten üblicherweise 1 bis 50 Gew.-% Tenside und gegebenenfalls Builder. Diese Angaben gelten sowohl für flüssige als auch für pulverförmige Wasch- und Reinigungsmittelformulierungen. Beispiele für die Zusammensetzung von Waschmittelfomulierungen, die in Europa, in den USA und in Japan gebräuchlich sind, findet man beispielsweise in Chemical and Eng. News, Band 67, 35 (1989) tabellarisch dargestellt. Weitere Angaben über die Zusammensetzung von Wasch- und Reinigungsmitteln kann man in Ullmanns Encyklopädie der technischen Chemie, Verlag Chemie, Weinheim 1983, 4. Auflage, Seiten 63-160 entnehmen. Die Waschmittel können gegebenenfalls noch ein Bleichmittel enthalten, z.B. Natriumperborat oder Percarbonat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, Farbübertragungsinhibitoren, Vergrauungsinhibitoren, schmutzablösungsfördernde Polymere (soil release polymere) und/oder Bleichaktivatoren.

Die oben beschriebenen Polyesterpolycarboxylate werden erfindungsgemäß in Waschmitteln mit reduziertem Phosphatgehalt (darunter soll ein Phosphatgehalt von weniger als 25 Gew.% Natriumtriphosphat verstanden werden) oder in phosphatfreien Waschmitteln sowie in Reinigungsmitteln eingesetzt. Die Polycarboxylate können dabei in Form eines Granulats, eines Pulvers, einer Paste, ein hochviskosen Masse, als Dispersion oder als Lösung in einem Lösemittel der Waschmittelformulierung zugegeben werden. Die Polycarboxylate können auch an der Oberfläche von Stellmitteln, z.B. Natriumsulfat oder Gerüststoffen (Zeolithen oder Betoniten) sowie an anderen festen Hilfsstoffen der Waschmittelformulierung absorbiert werden. Die Wasch- und Reinigungsmittelformulierungen enthalten z.B. 0,1 bis 30, vorzugsweise 0,5 bis 10 Gew.-% eines Polykondensats der Citronensäure und/oder der Isocitronensäure.

Die erfindungsgemäß zu verwendenden Polyesterpolycarboxylate können auch mit anderen bekannten Waschmitteladditiven (wie z.B. Vergrauungsinhibitoren, Claydispergatoren und Stoffen, die die Primärwaschwirkung verstärken, Farbübertragungsinhibitoren, Bleichaktivatoren) in Pulver- und Flüssigwaschmitteln (phosphathaltig und phosphatfrei) synergistische Effekte hervorrufen, bei denen nicht nur die Inkustationsinhibierung, sondern auch die Wirkung anderer Waschmitteladditive verstärkt werden kann.

Die Polyesterpolycarboxylate wurden in der Säureform durch MALDI-Massenspektroskopie (MALDI = matrix assisted laser desorption ionisation) charakterisiert, wobei die Angaben in den Beispielen die Maxima der Häufigkeitsverteilung und die obere erhaltene Molmassengrenze angeben.

### Beispiele

### Herstellung der Polyesterpolycarboxylate

### Beispiel 1

96,0 g wasserfreie Citronensäure wurden in 96 g Dioxan bei 60°C gelöst und 25,5 g Acetanhydrid innerhalb 1 h zugegeben. Nach weiteren 30 min bei 60°C wurden auf 100°C aufgeheizt und 1 h bei 100°C gehalten. Anschließend wurde wieder auf 60°C abgekühlt. Der Zyklus aus Acetanhydridzulauf, Tempern bei 60°C, Aufheizen auf 100°C und Abkühlung wurde noch dreimal wiederholt, wobei 25,5 g, 10,2 g bzw. 10,2 g Acetanhydrid zugegeben wurden. Anschließend wurde an einem Rotationsverdampfer das Eisessig/Dioxan Azeotrop abdestilliert. Zur Abtrennung von Restessigsäure wurde noch zweimal je 200 g Dioxan zugegeben und die Dioxan/Eisessig-Mischung abdestilliert. Das Produkt wurde in Wasser suspendiert und mit 20%iger NaOH bei 0 bis 10°C auf pH 7 gestellt. Das Poly-Na-Salz wurde gefriergetrocknet.

Das Polyesterpolycarboxylat hatte im MALDI-MS (MS = Massenspektroskopie) eine breite bimodale Verteilung mit Maxima der Häufigkeitsverteilgung bei 1300 und 5100. Die höchsten erhaltenen Molmassen lagen bei 7000.

### Beispiel 2

96 g wasserfreie Citronensäure wurden in 96 g Eisessig bei 60°C suspendiert und 25,5 g Acetanhydrid innerhalb 1 h zugegeben. Nach weiteren 30 min bei 60°C wurde auf 100°C aufgeheizt und 1 h bei 100°C gehalten. Anschließend wurde wieder auf 60°C abgekühlt. Der Zyklus aus Acetanhydridzulauf, Tempern bei 60°C, Aufheizen auf 100°C und Abkühlung wurde noch dreimal wiederholt, wobei 20,4 g, 7,7 g bzw. 7,7 g Acetanhydrid zugegeben wurden. Anschließend wurde an einem Rotationsverdampfer der Eisessig abdestilliert. Zur Abtrennung von Restessigsäure wurde noch zweimal je 200 g Dioxan zugegeben und die Dioxan/Eisessig-Mischung abdestilliert. Das Produkt wurde in Wasser suspendiert und mit 20%iger NaOH bei 0 bis 10°C auf pH 7 gestellt. Das Poly-Na-Salz wurde gefriergetrocknet.

Das Polyesterpolycarboxylat hatte im MALDI-MS eine breite bimodale Verteilung mit Maxima der Häufigkeitsverteilung bei 900 und 5200. Die höchsten erhaltenen Molmassen lagen bei 9000.

### Beispiel 3

384 g wasserfreie Citronensäure wurden in 384 g Dioxan bei 60°C suspendiert und 102 g Acetanhydrid innerhalb 30 min. zugegeben. Nach weiteren 30 min. bei 60°C wurden 67 g D,L-Äpfelsäure zugegeben, auf 100°C aufgeheizt und 30 min. bei 100°C gehalten. Bei gleicher Temperatur wurde dann das Dioxan/Eisessigazeotrop bei reduziertem Druck abdestilliert. Anschließend wurde wieder auf 60°C abgekühlt. Der Zyklus aus Acetanhydridzulauf, Tempern bei 60°C, Aufheizen auf 100°C und Abkühlung wurde noch dreimal wiederholt, wobei 102 g, 81,6 g bzw. 81,6 g Acetanhydrid und nach Ende der zweiten 60°C-Phase nochmals 67 g Äpfelsäure zugegeben wurden. Anschließend wurde an einem Rotationsverdampfer der Eisessig abdestilliert. Zur Abtrennung von Restessigsäure wurde noch zweimal je 200 g Dioxan zugegeben und die Dioxan/Eisessig-Mischung abdestilliert. Das Produkt wurde in Wasser suspendiert und mit 20%iger NaOH bei 0 bis 10°C auf pH 7 gestellt. Das Poly-Na-Salz wurde gefriergetrocknet. Das Polymer hatte eine mittlere Molmasse von 1200 (bestimmt durch MALDI-Massenspektroskopie).

### Beispiel 4

Beispiel 3 wurde mit 2 x 50 g Milchsäure anstelle der Äpfelsäure wiederholt. Das Polymer hatte eine mittlere Molmasse von 1400 (bestimmt durch MALDI-Massenspektroskopie).

### Beispiel 5

384 g wasserfreie Citronensäure wurden in 384 g Eisessig bei 60°C suspendiert und 102 g Acetanhydrid innerhalb 30 min. zugegeben. Nach weiteren 30 min. bei 60°C wurden 54 g Benzylalkohol zugegeben und auf 100°C aufgeheizt und 30 min. bei 100°C gehalten. Anschließend wurde wieder auf 60°C abgekühlt. Der Zyclus aus Acetanhydridzulauf, Tempern bei 60°C, Aufheizen auf 100°C und Abkühlung wurde noch dreimal wiederholt, wobei 102 g, 81,6 g bzw. 81,6 g Acetanhydrid und nach Ende der zweiten 60°C-Phase nochmals 54 g Benzylalkohol zugegeben wurden. Anschließend wurde an einem Rotationsverdampfer der Eisessig abdestilliert. Das Produkt wurde in Wasser suspendiert und mit 20%iger NaOH bei 0 bis 10°C auf pH 7 gestellt. Das Poly-Na-Salz wurde gefriergetrocknet. Das Polymer hatte eine mittlere Molmasse von 1200.

### Beispiel 6

Beispiel 4 wurde mit 2 x 261 g ethoxyliertem C_{13/15}-Alkohol mit 7 Mol Ethylenoxid anstelle des Benzylalkohols wiederholt. Das Polymer hatte eine mittlere Molmasse von 2400.

### Beispiel 7

Beispiel 4 wurde mit 2 x 375 g eines Polyethylenoxids der mittleren Molmasse (Mn) = 1500 anstelle des Benzylalkohols wiederholt. Das Polymer hatte eine mittlere Molmasse von 3700.

### Anwendungstechnische Beispiele

Um die inkrustationsinhibierende Wirkung der oben beschriebenen Polyesterpolycarboxylate zu testen, wurden sie in eine Pulverwaschmittel-Formulierung eingearbeitet. Mit dieser Waschmittelformulierung wurden jeweils Testgewebe aus Baumwollgewebe gewaschen. Die Zahl der Waschzyklen betrug 15. Nach dieser Anzahl von Wäschen wurde der Aschegehalt des Gewebes ermittelt, indem man das Testgewebe jeweils veraschte.

### Zusammensetzung des Waschmittels 1

8,0 % Alkylbenzolsulfonat
7,0 % C_{13/15}-Oxoalkohol ethoxyliert mit 7 Mol Ethylenoxid
2,0 % Kokosfettseife
1,0 % Carboxymethylcellulose
36,0 % Zeolith A
12,0 % Soda
22 % Natriumperborat
2,0 % Tetraacetylethylendiamin
0,2 % optische Aufheller
0,5 % Enzyme
5,0 % Polymer (Polyesterpolycarbonat bzw. Vergleich)
Rest auf 100 %: Natriumsulfat

**Tab. 1**

| Waschbedingungen | |
|---|---|
| Gerät: | Launder-o-meter der Fa. Atlas, Chicago |
| Zahl der Waschzyklen: | 15 |
| Waschflotte: | 250 ml Flotte |
| Waschdauer: | 30 min. bei 60°C |
| Waschmitteldosierung: | 4,5 g/l |
| Wasserhärte: | 22,4° dH (4 mmol Ca/l; Ca:Mg = 4:1) |
| Prüfgewebe: | 20 g Baumwolle-Nesselgewebe |

In Tabelle 2 ist der Aschegehalt der Testgewebe nach 15 Wäschen angegeben und mit den Ergebnissen beim Waschen ohne Zusatz und mit Standardzusätzen verglichen.

**Tabelle 2**

| Beispiel | Vergleichsbeispiel | Zusatz (5 %) | % Asche |
|---|---|---|---|
| | 1 | - | 3,26 |
| | 2 | AS/MS-Copolymer^{a} | 1,79 |
| | 3 | Na-Citrat | 2,12 |
| 8 | - | Produkt gemäß Bsp. 1 | 0,46 |
| 9 | - | Produkt gemäß Bsp. 2 | 0,50 |

| | | | |
|---|---|---|---|
| a) Copolymer aus Acrylsäure und Maleinsäure im Gewichtsverhältnis 70:30 mit einem K-Wert von 60 (gemessen nach H. Fikentscher, Cellulose-Chemie, Band 13, 58-64 und 71-74 (1932) am Na-Salz bei pH 7 und 25°C in 1%iger wäßriger Lösung) | | | |

### Waschmittel 2

9,00 % Na-Laurylsulfat
10,00 % C_{13/15}-Oxoalkohol ethoxyliert mit 7 Mol Ethylenoxid
0,30 % Kokosfettseife
1,20 % Carboxymethylcellulose
36,50 % Zeolith A
10,30 % Soda
4 % Natriumsulfat
14,4 % Natriumperborat
4,20 % TAED
2,40 % Natriumsilikat
8,00 % Polymer (Prüfsubstanz bzw. Vergleich)
Rest auf 100 %: Wasser

**Tab. 3**

| Waschbedingungen | |
|---|---|
| Gerät: | Launder-o-meter der Fa. Atlas, Chicago |
| Zahl der Waschzyclen: | 15 |
| Waschflotte: | 250 ml Flotte |
| Waschdauer: | 30 min. bei 60°C |
| Waschmitteldosierung: | 6,0 g/l |
| Wasserhärte: | 22,4°dH (4 mmol Ca/l; Ca:Mg = 4:1) |
| Flottenverhältnis: | 1 : 12,5 |
| Prüfgewebe: | 20 g Baumwolle-Nesselgewebe |

In Tabelle 4 ist der Aschegehalt jeweils angegeben und mit den Ergebnissen beim Waschen ohne Zusatz und mit Standardzusätzen verglichen.

**Tabelle 4**

| Aschegehalte der Testgewebe nach 15 Wäschen mit Waschmittelformulierung 2 | | | |
|---|---|---|---|
| Versuch | Vergleichsversuch | Zusatz | % Asche |
| | 4 | - | 4,83 |
| - | 5 | AS/MS-Copolymer | 1,95 |
| | 6 | wie in Vergleichsbeispiel 2 Na-Citrat | 3,75 |
| 10 | - | Produkt aus Beispiel 1 | 2,70 |
| 11 | - | Produkt aus Beispiel 2 | 2,91 |

## Patentansprüche

1. Verfahren zur Herstellung von Polykondensaten der Citronensäure und/oder Isocitronensäure, dadurch gekennzeichnet, daß man
(a) Citronensäure, Isocitronensäure oder deren Gemische in einem organischen Lösemittel in Gegenwart eines wasserentziehenden Mittels zumindest teilweise in die Anhydridform überführt und das Reaktionsgemisch anschließend, gegebenenfalls nach Zusatz von cokondensierbaren Verbindungen aus der Gruppe
(b) anderer Hydroxycarbonsäuren und/oder
(c) Aminosäuren, Alkoholen, Aminen und/oder mindestens zweibasischen Carbonsäuren, die von den Carbonsäuren (a) und (b) verschieden sind, bei Temperaturen von mindestens
80°C zu Polycarboxylaten der Citronensäure und/oder Isocitronensäure mit einem mittleren Molekulargewicht von mindestens 500 kondensiert.

2. Verfahren nach Anspruch 1, dadurch gekennzeichnet, daß man
(a) pro 1 Mol Citronensäure und/oder Isocitronensäure
(b) 0 bis 100 Mol-% mindestens einer anderen Hydroxycarbonsäure und/oder
(c) 0 bis 40 Mol-% an Aminosäuren, Alkoholen, Aminen und/oder mindestens zweibasischen Carbonsäuren, die von den Carbonsäuren (a) und (b) verschieden sind,
einsetzt.

3. Verfahren nach Anspruch 1 oder 2, dadurch gekennzeichnet, daß man die Anhydridbildung aus den Verbindungen der Komponente (a) und die Reaktion der Anhydride mit den Verbindungen (a), den aus (a) erhaltenen Anhydriden und gegebenenfalls (b) und/oder (c) mehrmals wiederholt.

4. Verfahren nach einem der Ansprüche 1 bis 3, dadurch gekennzeichnet, daß man eine Lösung von
(a) Citronensäure und/oder Isocitronensäure in Essigsäure durch Zusatz von Essigsäureanhydrid als wasserentziehendem Mittel partiell in Citronensäureanhydrid und/oder Isocitronensäureanhydrid bei Temperaturen bis zu 80°C überführt und das Reaktionsgemisch anschließend durch Erhitzen auf eine Temperatur in dem Bereich von 80 bis 150°C kondensiert.

5. Verfahren nach einem der Ansprüche 1 bis 3, dadurch gekennzeichnet, daß man zu einer Lösung von Citronensäureanhydrid oder von Isocitronensäureanhydrid in Essigsäure
(b) Äpfelsäure, Glykolsäure, Milchsäure oder Mischungen der genannten Säuren zusetzt und durch Erhitzen auf eine Temperatur in dem Bereich von 80 bis 150°C kondensiert.

6. Verfahren nach Anspruch 5, dadurch gekennzeichnet, daß man die Kondensation zusätzlich in Gegenwart von
(c) Aminosäuren, Alkoholen, Aminen und/oder mindestens zweibasischen Carbonsäuren, die von den Carbonsäuren (a) und (b) verschieden sind, durchführt.

7. Polykondensate der Citronensäure und/oder der Isocitronensäure, dadurch gekennzeichnet, daß sie erhältlich sind nach dem Verfahren der Ansprüche 1 bis 6.

8. Verwendung der nach den Ansprüchen 1 bis 6 erhältlichen Polykondensate der Citronensäure und/oder der Isocitronensäure als Zusatz zu phosphatfreien und phosphatreduzierten Wasch- und Reinigungsmitteln.

9. Wasch- und Reinigungsmittel, die mindestens ein Tensid und gegebenenfalls Builder sowie andere übliche Bestandteile enthalten, dadurch gekennzeichnet, daß sie 0,1 bis 30 Gew.-% eines Polyestercarboxylats enthalten, das dadurch erhältlich ist, daß man
(a) Citronensäure, Isocitronensäure oder deren Gemische in einem organischen Lösemittel in Gegenwart eines wasserentziehenden Mittels zumindest teilweise in die Anhydridform überführt und das Reaktionsgemisch anschließend, gegebenenfalls nach Zusatz von cokondensierbaren Verbindungen aus der Gruppe
(b) anderer Hydroxycarbonsäuren und/oder
(c) Aminosäuren, Alkoholen, Aminen und/oder mindestens zweibasischen Carbonsäuren, die von den Carbonsäuren (a) und (b) verschieden sind,
bei Temperaturen von mindestens 80°C zu Polycarboxylaten der Citronensäure und/oder Isocitronensäure mit einem mittleren Molekulargewicht von mindestens 500 kondensiert.
